# EUROPEAN PATENT SPECIFICATION

(11) **EP 4 635 164 B1**
(45) Date of publication and mention of the grant of the patent: **15.07.2026**
(21) Application number: 22835800.8
(22) Date of filing: 15.12.2022
(51) Int. Cl.: H04L 67/12

(54) **METHOD FOR OPERATING A COMMON SERVICES ENTITY OR FUNCTIONALITY FOR AN INTERNET-OF-THINGS SYSTEM, THE INTERNET-OF-THINGS SYSTEM COMPRISING A PLURALITY OF INTERNET-OF-THINGS COMMUNICATION DEVICES IN A TELECOMMUNICATIONS NETWORK, INTERNET-OF-THINGS SYSTEM OR TELECOMMUNICATIONS NETWORK, PROGRAM AND COMPUTER-READABLE MEDIUM**
VERFAHREN ZUM BETREIBEN EINER GEMEINSAMEN DIENSTEINHEIT ODER FUNKTIONALITÄT FÜR EIN INTERNET-DER-DINGE-SYSTEM, DAS MEHREREN INTERNET-DER-DINGE-KOMMUNIKATIONSVORRICHTUNGEN IN EINEM TELEKOMMUNIKATIONSNETZWERK ENTHÄLT,INTERNET-DER-DINGE-SYSTEM ODER TELEKOMMUNIKATIONSNETZWERK, PROGRAMM UND COMPUTERLESBARES MEDIUM
PROCÉDÉ DE FONCTIONNEMENT D'UNE ENTITÉ OU D'UNE FONCTIONNALITÉ DE SERVICES COMMUNS POUR UN SYSTÈME DE L'INTERNET DES OBJETS, LE SYSTÈME DE L'INTERNET DES OBJETS COMPRENANT UNE PLURALITÉ DE DISPOSITIFS DE COMMUNICATION DE L'INTERNET DES OBJETS DANS UN RÉSEAU DE TÉLÉCOMMUNICATION, SYSTÈME DE L'INTERNET DES OBJETS OU RÉSEAU DE TÉLÉCOMMUNICATION, PROGRAMME ET SUPPORT LISIBLE PAR ORDINATEUR

(43) Date of publication of application: 22.10.2025
(73) Proprietor: Deutsche Telekom AG, 53113 Bonn (DE)
(72) Inventor: KRAFT, Andreas, 14129 Berlin (DE); NEUBACHER, Andreas, 2100 Korneuburg (AT); FLYNN IV, William, Robert, Schwenksville, PA 19473 (US)
(74) Representative: Kutzenberger Wolff & Partner
(86) International application number: PCT/EP2022/086203
(87) International publication number: WO 2024/125802

(56) References cited:
- SUNG-SOOK YOON: "Managing M2M entity connectivity based on heartbeat event", 16 May 2011 (2011-05-16), ETSI, XP055051256, Retrieved from the Internet <URL:http://docbox.etsi.org/M2M/M2M/05-CONTRIBUTIONS/2011/M2M(11)0364_CR_Managing_M2M_entity_connectivity_based_on_heartbeat_event.docx> [retrieved on 20130128]

## Description

### BACKGROUND

The present invention relates to a method for operating a common services entity or functionality for an internet-of-things system, the internet-of-things system comprising a plurality of internet-of-things communication devices in a telecommunications network, wherein the common services entity or functionality comprises or is assigned to or accesses a subscription entity or functionality as at least one common service function supported by a common services layer for the internet-of-things system. Document: Sung-Sook Yoon: "Managing M2M entity connectivity based on heartbeat event", 16 May 2011 discloses a similar architecture.

Furthermore, the present invention relates to an internet-of-things system or telecommunications network for being operated with or comprising a common services entity or functionality, the internet-of-things system comprising a plurality of internet-of-things communication devices in the telecommunications network, wherein the common services entity or functionality comprises or is assigned to or accesses a subscription entity or functionality as at least one common service function supported by a common services layer for the internet-of-things system.

Furthermore, the present invention relates to a program and to a computer-readable medium for operating a common services entity or functionality for an internet-of-things system according to the inventive method.

Internet-of-things (IoToloTo) and/or machine-to-machine (M2M) communication refers to systems typically comprising a plurality of devices or communication devices - so-called internet-of-things devices or internet-of-things communication devices - having typically network connectivity enabling the internet-of-things devices to collect, transmit, perform actions, receive and/or exchange data regarding managed assets. The data might be used either in a central or (at least with regard to the often geographically rather dispersed internet-of-things communication devices) centralized entity or server node, or transmitted, from such centralized entity or server node, towards client devices, as part of a service or communication service (internet-of-things service) associated with the internet-of-things system.

An M2M (or loT) service layer is an example of a type of service layer specifically targeted towards providing value-added services for M2M type devices or IOT-devices or communication devices and applications. Recently, several industry standards bodies (e.g., the global oneM2M partnership project) have been developing M2M service layers to address the challenges associated with the integration of M2M-type devices and M2M-type applications into deployments such as the Internet/Web, cellular, enterprise, and home network. In the following, the terms machine-to-machine (M2M) and internet-of-things (IoT) are used interchangeably or synonymously.

Communication, data models and relations, as well as containments on devices and communication infrastructure is vastly different in IoT than similar aspects in enterprise IT, streaming, or general open data communication on the Internet. One of the goals in oneM2M is to provide an interoperable infrastructure, and a common understanding, use and access to the service functions that are common for loT.

An M2M service layer may provide applications and devices access to a collection of M2M-oriented capabilities supported by the service layer. A few examples include security, charging, data management, device management, discovery, provisioning, and connectivity management. These capabilities are made available to applications via application programming interfaces (APIs) which make use of message formats, resource structures, resource representations, and function calls as defined by the M2M service layer. For example, an M2M service layer may maintain a large amount of M2M data, which can be retrieved or subscribed to by M2M applications based on their access rights. Subscription-based data access could be more efficient than retrieval-based data access since it does not introduce a message to an M2M application until desired changes to the subscribed resource takes place.

More specifically, oneM2M provides technical specifications which address the need for a common M2M service layer that can be readily embedded within various hardware and software, and which can be relied upon to connect a wide variety of devices in the field with M2M application servers worldwide.

In oneM2M these service functions are modeled as so-called "resources" that are organized in a tree structure, and that either hold data, are structure components, or offer access to a service function that can be utilized by IoT devices and applications. These resources are hosted on and managed by a "oneM2M Common Service Entity", or a common services entity or functionality. Currently, oneM2M specifies more than 75 types of resources; the common form when talking about oneM2M resource types is to write them as follows: <aResourceType>. One of these service functions a oneM2M common services entity or functionality offers is the possibility for an application to subscribe to events that happen when working with the resources. For example, an application may subscribe to certain events that happen in a lifetime of resources. That application then will be notified when, for example, new data arrives or when the resource is modified. The resource type that represents a subscription is named "<subscription>": An IoT application creates a <subscription> resource for a monitored resource; the <subscription> resource is configured with one or more event types, and a target that will be notified whenever a relevant event is received. In case that an event happens for the monitored resource, the common services entity or functionality evaluates the action that is configured by the <subscription> resource and sends a notification to the application. However, a notification to be generated necessarily requires a positive (or activated) event to occur.

### SUMMARY

An object of the present invention is to provide a technically simple, effective, sustainable, and cost-effective solution for operating a common services entity or functionality for an internet-of-things system. A further object of the present invention is to provide a corresponding internet-of-things system or telecommunications network, and a corresponding program and computer-readable medium.

The object of the present invention is achieved by a method for operating a common services entity or functionality for an internet-of-things system, the internet-of-things system comprising a plurality of internet-of-things communication devices in a telecommunications network, wherein the common services entity or functionality comprises or is assigned to or accesses a subscription entity or functionality as at least one common service function supported by a common services layer for the internet-of-things system,
wherein the subscription entity or functionality is used or accessed by a plurality of application entities or functionalities or by other common services entities or functionalities, and wherein the subscription entity or functionality is enabled to generate a specific subscription resource related to at least one specific subscription consumer entity or functionality, the specific subscription resource furthermore being related to at least one specific internet-of-things communication device, the at least one specific internet-of-things communication device being able to be activated or being able to change its state or mode of operation,
wherein, in order to operate the common services entity or functionality with the subscription entity or functionality and/or with the specific subscription resource being related to a timer entity or functionality defining a time duration, the method comprises the following steps:
   -- in a first step, the timer entity or functionality is started or caused to be started by the subscription entity or functionality and/or by the specific subscription resource,
   -- in a second step, a notification is transmitted or triggered to be transmitted, by the subscription entity or functionality and/or by the specific subscription resource, towards the at least one specific subscription consumer entity or functionality in case that - upon the timer entity or functionality being elapsed - the specific internet-of-things communication device has remained inactivated or has maintained its state or its mode of operation during the time duration of the timer entity or functionality.

It is thereby advantageously possible according to the present invention that the notification is transmitted or triggered to be transmitted in case that the specific internet-of-things communication device has remained inactivated or has maintained its state or its mode of operation during the time duration of the timer entity or functionality. Hence, according to the present invention, it is advantageously possible to detect the absence of an event or of events or of a specific event or specific events such as the absence of the activation (i.e. the inactivity) of one or a plurality of internet-of-things communication devices or the absence of a modification of a state or of a mode of operation (i.e. the preservation of such state or mode of operation) of one or a plurality of internet-of-things communication devices - during a predetermined time interval, this time interval corresponding to the time interval defined by the timer entity or functionality (defining a time duration beginning (upon being started) from an initial point in time until (upon the expiration of the timer) a final point in time. Hence, it is advantageously possible, according to the present invention, to detect the situation that a device or several devices have not sent anything at all for a while. For example, this might be interesting in case of monitoring devices for sensitive use cases, e.g. for devices in an alarm system, that send ping data regularly just to indicate that they are still functioning and connected. According to the present invention, it is thereby advantageously possible to provide, e.g., a "heartbeat" or "watchdog" functionality as part of the common services entity or functionality and/or as part of the common services layer 200, i.e. this functionality is able to be implemented within or as part of the common services entity or functionality and/or the common services layer.

According to the method of the present invention, a common services entity or functionality for an internet-of-things system is operated, wherein the internet-of-things system comprises a plurality of internet-of-things communication devices in (or connected to) a telecommunications network. The common services entity or functionality comprises or is assigned to or accesses a subscription entity or functionality as at least one common service function supported by a common services layer for the internet-of-things system. Hence, the subscription entity or functionality corresponds to one service function of typically a plurality of service functions that the (oneM2M) common services layer and/or the common services entity or functionality offers, namely the possibility for an application to subscribe to events that happen when working with the resources or internet-of-things communication devices. For example, an application (or subscription consumer entity or functionality) may subscribe to certain events that happen in a lifetime of one resource or of a plurality of resources; that application then will be notified when, for example, new data arrives or when the resource is modified. According to the present invention, the subscription entity or functionality is used or accessed by a plurality of application entities or functionalities or by other common services entities or functionalities. The subscription entity or functionality is enabled to generate a specific subscription resource (representing the subscription) related to at least one specific subscription consumer entity or functionality, the specific subscription resource furthermore being related to at least one specific internet-of-things communication device, the at least one specific internet-of-things communication device being able to be activated or being able to change its state or mode of operation.

In order to operate the common services entity or functionality with the subscription entity or functionality and/or with the specific subscription resource being related to a timer entity or functionality defining a time duration, the method according to the present invention comprises the following steps:
-- in a first step, the timer entity or functionality is started or caused to be started by the subscription entity or functionality and/or by the specific subscription resource (especially either after a previous expiration of the timer entity or functionality and/or after having previously transmitted a notification and/or after having previously received an indication that the specific internet-of-things communication device was activated or has changed its state or mode of operation),
-- in a second step, a notification is transmitted or triggered to be transmitted, by the subscription entity or functionality and/or by the specific subscription resource, towards the at least one specific subscription consumer entity or functionality in case that - upon the timer entity or functionality being elapsed - the specific internet-of-things communication device has remained inactivated or has maintained its state or its mode of operation during the time duration of the timer entity or functionality.

According to the present invention, the subscription entity or functionality is enabled to generate a specific subscription resource related to at least one specific subscription consumer entity or functionality, and furthermore, the specific subscription resource is related to at least one specific internet-of-things communication device, wherein the at least one specific internet-of-things communication device is able to be activated or is able to change its state or mode of operation.

In the context of the present invention, this especially also means that, as the specific subscription resource is of a specific type that is able to refer to other subscriptions, and especially to other subscription being of a different type of subscriptions (such as, e.g. 'normal subscriptions'). Such specific subscription resources are related to at least one specific internet-of-things communication device; however, this relation does not necessarily need to be a direct relationship: According to a preferred embodiment of the present invention, the specific subscription resource is only indirectly related to the at least one specific internet-of-things communication device. This means that the specific subscription resource might be, e.g., related (i.e. directly related) to data structures or data regarding events or results of actions or data generated by an application, and these data structures or data regarding events or results of actions or data generated by an application are relating (directly or indirectly) to at least one specific internet-of-things communication device. For example, in case that a new internet-of-things communication device is detected or initialized and the corresponding data structures are not generated or within a predefined time interval, a notification is triggered.

Furthermore, such specific subscription resources are able to be used at different parts of the internet-of-things system.

Furthermore, the mentioned other subscriptions (or other subscription resources, referring to the other subscriptions, especially being of a different type of subscriptions, e.g. 'normal subscriptions'); especially according to the present invention, such other subscriptions are used, within the internet-of-things system and/or by the common services entity or functionality, for monitoring purposes, i.e. the existence or configuration of such other subscriptions are typically triggering notifications in case that - depending on the configuration of such other subscriptions, or the respective subscription resources of such other subscriptions - changes happen to (or at) the monitored element or resource or internet-of-things communication device (e.g. there is an update applied to the element or resource or internet-of-things communication device, or there is a child element or child resource added to a configuration).

The mentioned other subscriptions (or other subscription resources, referring to the other subscriptions, especially being of a different type of subscriptions, e.g. 'normal subscriptions') are typically defined such that notifications are triggered only in case that the monitored resource has been activated or has changed its state or its mode of operation; in contrast, the specific subscription resources used according to the present invention are defined such that it especially refers to such mentioned other subscriptions (themselves monitoring elements or resources of or within or being parts of the internet-of-things system), and the specific subscription resources used according to the present invention are defined such that there is typically
-- either a periodic monitoring scheme implemented, configured or realized (e.g. a predefined number of events needs to have happened within a (fixed) time interval (e.g. within one minute or during another time interval), and this within each such time interval); i.e. the (fixed) time interval is started at a predefined point in time, and a predefined number of events needs to have happened within that (fixed) time interval,
-- or the monitoring occurs using a 'sliding (time) window' scheme, hence, the implemented monitoring also refers to a time interval but the timer is started (only) when the first event has occurred; afterwards, just as with the periodic monitoring, a certain number of events need to happen (within each time interval of a predetermined length or time span);
and with both schemes, the specific subscription resources used according to the present invention are defined such that a notification is triggered (to be sent especially to the at least one specific subscription consumer entity or functionality) in case that the number of events within the respective time windows or time intervals is not reached.

According to the present invention, the specific subscription resources used are especially defined as of a type <crossResourceSubscription> - especially in contrast to the mentioned other subscriptions (or other subscription resources, referring to the other subscriptions, especially being of a different type of subscriptions, e.g. 'normal subscriptions'), typically being of the type <subscription>, i.e. typically monitoring single events. The specific subscription resources used according to the present invention are especially defined or configured to monitor notifications of the mentioned other subscriptions, hence, the specific subscription resources used according to the present invention could be regarded as a sort of subscription consumer entity or functionality with regard to the mentioned other subscriptions.

According to the present invention, it is advantageously possible and preferred that the common services entity or functionality is an instantiation of a set of at least one common service functions, wherein the common services entity or functionality is hosted on a network node, especially an infrastructure node and/or a middle node and/or an application-service node, wherein especially the common services layer supports a set of common service functions, especially service capabilities.

It is thereby advantageously possible according to the present invention to comparatively easily implement and realize the present invention.

According to the present invention, it is advantageously furthermore possible and preferred that the specific subscription resource, related to the at least one specific subscription consumer entity or functionality and to the at least one specific internet-of-things communication device, is generated or initialized by means of the subscription entity or functionality receiving, by the at least one specific subscription consumer entity or functionality, an initialization message for the specific subscription resource,
wherein the initialization message is indicative of a request, by the at least one specific subscription consumer entity or functionality, for a subscription of the specific subscription resource,
wherein especially the subscription entity or functionality determines, especially based on the initialization message, that the at least one specific subscription consumer entity or functionality has privilege to initialize or to trigger to initialize the specific subscription resource.

It is thereby advantageously possible according to the present invention to comparatively easily implement and realize the present invention.

According to the present invention, it is advantageously furthermore possible and preferred that, in the second step, the notification is transmitted or triggered to be transmitted, by the subscription entity or functionality and/or by the specific subscription resource, towards the at least one specific subscription consumer entity or functionality in case that the specific internet-of-things communication device has neither been activated nor has changed its state or its mode of operation during the time duration of the timer entity or functionality.

It is thereby advantageously possible according to the present invention to comparatively easily implement and realize the present invention.

According to the present invention, it is furthermore advantageously possible and preferred that the specific subscription consumer entity or functionality corresponds to an application entity or functionality or to another common services entity or functionality.

It is thereby advantageously possible according to the present invention to comparatively easily implement and realize the present invention.

Furthermore, it is advantageously possible and preferred according to the present invention that the telecommunications network provides radio coverage in a predetermined geographical area, and - by means of transmission of internet-of-things payload data from the internet-of-things communication devices, respectively, to the telecommunications network and/or from the telecommunications network to the internet-of-things communication devices, respectively - the internet-of-things system provides an internet-of-things service.

It is thereby advantageously possible according to the present invention to comparatively easily implement and realize the present invention.

Furthermore, the present invention relates to an internet-of-things system or telecommunications network for being operated with or comprising a common services entity or functionality, the internet-of-things system comprising a plurality of internet-of-things communication devices in the telecommunications network, wherein the common services entity or functionality comprises or is assigned to or accesses a subscription entity or functionality as at least one common service function supported by a common services layer for the internet-of-things system,
wherein the subscription entity or functionality is used or accessed by a plurality of application entities or functionalities or by other common services entities or functionalities, and wherein the subscription entity or functionality is enabled to generate a specific subscription resource related to at least one specific subscription consumer entity or functionality, the specific subscription resource furthermore being related to at least one specific internet-of-things communication device, the at least one specific internet-of-things communication device being able to be activated or being able to change its state or mode of operation,
wherein, in order to operate the common services entity or functionality with the subscription entity or functionality and/or with the specific subscription resource being related to a timer entity or functionality defining a time duration, the internet-of-things system is configured such that:
   -- the timer entity or functionality is started or caused to be started by the subscription entity or functionality and/or by the specific subscription resource,
   -- a notification is transmitted or triggered to be transmitted, by the subscription entity or functionality and/or by the specific subscription resource, towards the at least one specific subscription consumer entity or functionality in case that - upon the timer entity or functionality being elapsed - the specific internet-of-things communication device has remained inactivated or has maintained its state or its mode of operation during the time duration of the timer entity or functionality.

Additionally, the present invention relates to a program comprising a computer readable program code, which, when executed on a computer and/or on a network node of an internet-of-things system and/or on a common services entity or functionality and/or on a subscription entity or functionality, or in part on a network node of an internet-of-things system and/or in part on a common services entity or functionality and/or in part on a subscription entity or functionality, causes the computer and/or the network node of an internet-of-things system and/or the common services entity or functionality and/or the subscription entity or functionality to perform the inventive method.

Still additionally, the present invention relates to a computer-readable medium comprising instructions which when executed on a computer and/or on a network node of an internet-of-things system and/or on a common services entity or functionality and/or on a subscription entity or functionality, or in part on a network node of an internet-of-things system and/or in part on a common services entity or functionality and/or in part on a subscription entity or functionality, causes the computer and/or the network node of an internet-of-things system and/or the common services entity or functionality and/or the subscription entity or functionality to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates an internet-of-things system comprising a telecommunications network, a plurality of internet-of-things communication devices, as well as common services entity or functionality and/or a common services layer.
Figure 2 schematically illustrates a common services entity or functionality, the common services entity or functionality comprising a subscription entity or functionality and communicating with a specific subscription consumer entity or functionality as well as with a specific internet-of-things communication device.
Figure 3 schematically illustrates the common services entity or functionality and/or the subscription entity or functionality in a specific event and notification situation according to the present invention.
Figure 4 schematically illustrates the generation and/or triggering of a notification related to a subscription according to the method of the present invention.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

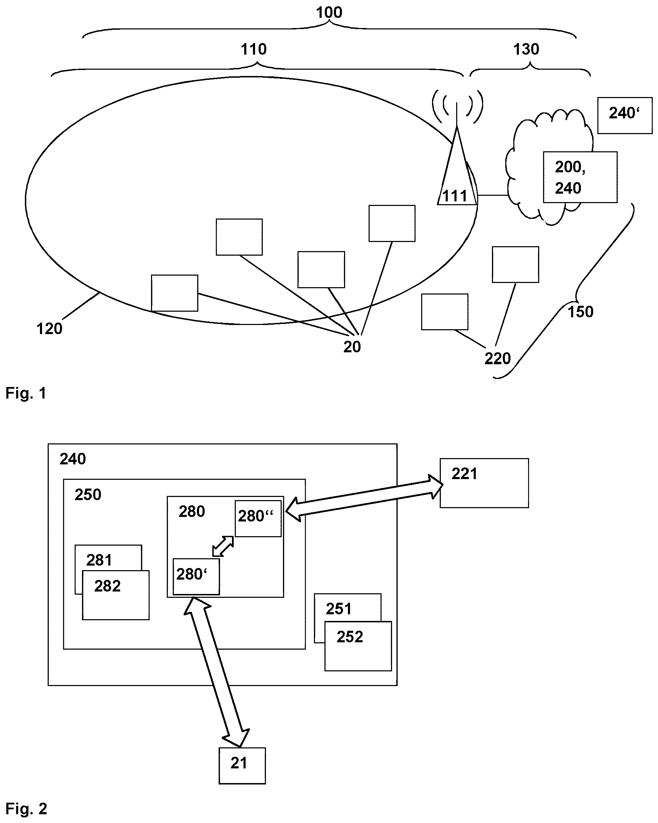

In Figure 1, an internet-of-things system 150 is schematically shown, comprising a telecommunications network 100 as well as a plurality of internet-of-things communication devices 20, as well as a common services entity or functionality 240 and/or a common services layer 200. The telecommunications network 100 is typically a mobile communication network, especially a cellular communication network 100, such as a public land mobile network, and is schematically represented as comprising an access network 110, and a core network 130. However, the telecommunications network 100 might also be, at least in part, a fixed-line communication network or fixed-line telecommunications network (not represented in Figure 1); especially a part of the telecommunications network 100 is realized as, or is part of, a mobile communication network 100, and a part of the telecommunications network 100 is realized as, or is part of, a fixed-line telecommunications network 100. Especially, the telecommunications network 100 is or could be understood as being, at least partly, a fixed-line telecommunications network 100 as at least some of the internet-of-things communication devices 20 are linked, to the telecommunications network 100, via a fixed-line connection.

Exemplarily, Figure 1 shows a base station entity 111 as part of the access network 110 of the telecommunications network 100 (as a mobile communication network 100). Furthermore, a geographical area 120 is schematically shown in Figure 1, this geographical area 120 can be understood as either corresponding to a radio cell of the access network of the telecommunications network 100, especially the radio cell 120 being served by the base station entity 111, or, alternatively, the geographical area 120 can be understood as corresponding to the total geographical area of radio coverage (typically comprising a multitude of different radio cells, in turn being served by a multitude of different base station entities, not represented in detail in Figure 1) of the telecommunications network 100. In any case, the internet-of-things communication devices 20 of the internet-of-things system 150 are "in" the telecommunications network 100 (or connected to the telecommunications network 100), i.e. there is, at least intermittently, a radio communication link operational between the internet-of-things communication devices 20 and the telecommunications network 100 (typically in the form of the corresponding access network 110, using a base station entity 111) for the transmission of internet-of-things payload data from the internet-of-things communication devices 20, respectively, to the telecommunications network 100 and/or from the telecommunications network 100 to the internet-of-things communication devices 20, respectively.

According to the present invention, the internet-of-things system 150 comprises or is operated using the common services entity or functionality 240 and/or the common services layer 200, especially according to the oneM2M standard. The common services entity or functionality 240 is simply represented, in Figure 1, as a box; however, it is not necessarily located, realized or accessed at one specific location only, or via one specific reference only, but the common services entity or functionality 240 (and/or the common services layer 200) might be located, realized or accessed in a distributed manner, i.e. at different locations and/or using different (addressing) references or pieces of reference information; this is schematically represented by means of reference sign 240' which is shown as an additional possibility to realize the common services entity or functionality 240; hence Figure 1 is also intended to represent the possibility that the common services entity or functionality 240 is realized as a distributed system. The common services entity or functionality 240 and/or the common services layer 200 is schematically shown in Figure 2, which schematically illustrates the common services entity or functionality 240 comprising a subscription entity or functionality 250 and communicating with a specific subscription consumer entity or functionality 221 as well as with a specific internet-of-things communication device 21. oneM2M aims to specify a standardized service layer to provide IoT communication and other related loT functionalities to devices, networks, edge and cloud computing nodes, and applications. One of the goals in oneM2M is to provide an interoperable infrastructure, and a common understanding, use and access to the service functions that are common for loT. In oneM2M these service functions are modeled as so-called "resources" that either hold data, are structure components, or offer access to a service function that can be utilized by loT devices and applications. These resources are hosted on and managed by the "oneM2M Common Service Entity", hereinafter also called common services entity or functionality 240. One of the service functions the (oneM2M) common services entity or functionality 240 offers is the possibility for an application to subscribe to events that happen when working with the resources. For example, an application (such as the specific subscription consumer entity or functionality 221) may subscribe to certain events that happen in a lifetime of a resource, such as the specific internet-of-things communication device 21). That application 221 then will be notified when, for example, new data arrives or when the resource 21 is modified or provides a sensor reading or is otherwise activated or triggered by some event. The resource type that represents a subscription is named "<subscription>", and corresponds to the specific subscription resource 280. That's why the common services entity or functionality 240 comprises the subscription entity or functionality 250, and the subscription entity or functionality 250 in turn comprises the specific subscription resource 280; i.e. the specific subscription resource somehow links the specific subscription consumer entity or functionality (or application) 221 with the specific internet-of-things communication device (or resource) 21 in the sense described above. Of course, the subscription entity or functionality 250 might comprise, besides the specific subscription resource 280, further subscription resources 281, 282, and the common services entity or functionality 240 might comprise (besides the subscription entity or functionality 250) other service functions 251, 252. In addition, the subscription entity or functionality 250 especially also comprises or relates to other subscriptions (or other subscription resources, referring to the other subscriptions, especially being of a different type of subscriptions, e.g. 'normal subscriptions').

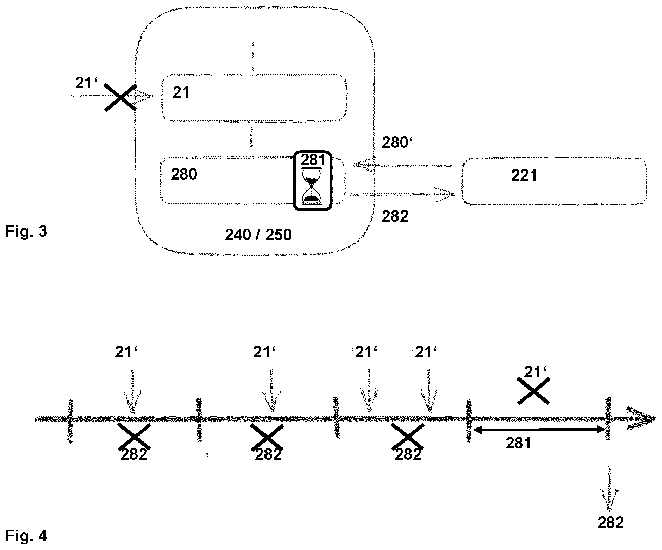

Hence, according to the present invention, the subscription entity or functionality 250 is used or accessed (or able to be accessed) by a plurality of application entities or functionalities 220 (cf. Fig. 1) or by other common services entities or functionalities. More specifically, the subscription entity or functionality 250 is enabled to generate (besides further subscription resources 281, 282) the specific subscription resource 280, being related to the specific subscription consumer entity or functionality 221 (or to at least one specific subscription consumer entity or functionality 221). The specific subscription resource 280 furthermore is also related to the specific internet-of-things communication device 21 (or to the at least one specific internet-of-things communication device 21). During the operation of the internet-of-things system 150, the (at least one) specific internet-of-things communication device 21 is able to be activated or is able to change its state or mode of operation, and such activation or change of state or mode of operation is able to be notified to the at least one specific subscription consumer entity or functionality 221. However, according to the present invention, the absence of events, e.g. when a device (such as the specific internet-of-things communication device 21) or several devices haven't sent anything at all for a while shall be detected. This is especially interesting when it comes to monitoring devices for sensitive use cases, e.g. for devices in an alarm system, that send ping data regularly just to indicate that they are still functioning and connected. Hence, according to the present invention, a functionality is provided to the common services entity or functionality 240 that one or multiple specified resources must not change within a time window. This is realized, according to the present invention, by means of a timer entity or functionality 281 defining a time duration, wherein, in a first step, the timer entity or functionality 281 is started or caused to be started by the subscription entity or functionality 250 and/or by the specific subscription resource 280, and wherein, in a second step, a notification 282 is transmitted or triggered to be transmitted, by the subscription entity or functionality 250 and/or by the specific subscription resource 280, towards the at least one specific subscription consumer entity or functionality 221 in case that - upon the timer entity or functionality 281 being elapsed - the specific internet-of-things communication device 21 has remained inactivated or has maintained its state or its mode of operation (especially its previous state or its previous mode of operation) during the time duration of the timer entity or functionality 281. This is represented in Figure 3, which schematically shows the common services entity or functionality 240 and/or the subscription entity or functionality 250 in such a specific event and notification situation according to the present invention, i.e. an event 21' does not occur (hence, the cross) at the specific internet-of-things communication device 21 duri40ng the time duration of the timer entity or functionality 281 of the specific subscription resource 280, which triggers the specific subscription resource 280 to notify the specific subscription consumer entity or functionality 221 by means of the notification 282.

The same situation is also represented in Figure 4 which schematically illustrates the generation and/or triggering of the notification 282 related to a subscription (according to the specific subscription resource 280) according to the method of the present invention: Figure 4 shows a time line where, in a first time interval (indicated by the space between two vertical lines on the left hand side of the representation) an event 21' occurs at the specific internet-of-things communication device 21. The event 21' especially corresponds to an activation or a change of the mode of operation of the specific internet-of-things communication device 21. The event 21' occurring during the first time interval results in the absence of the notification 282 being generated by the specific subscription resource 280 (i.e. the notification 282 is not generated (hence, the cross) during the first time interval. The same is true for the next two time intervals (second and third time intervals, indicated by the spaces between the above mentioned second vertical line and the two next vertical lines, respectively); during the third time interval, the event 21' even occurs twice, but nevertheless results in the notification 282 not being generated.

However during the last (fourth) time interval represented in Figure 4 (indicated by the space between two vertical lines on the right hand side of the representation), the event 21' does not occur during the time duration of the time entity or functionality 281, thus resulting the notification 282 being generated (after the expiration of the timer entity or functionality 281) and transmitted to the specific subscription consumer entity or functionality 221.

Hence, according to the present invention, it is advantageously possible to detect the absence of events (e.g. event 21' during the time interval defined by the timer entity or functionality 281); as a result, it is advantageously possible according to the present invention to detect the situation that a device or several devices haven't sent anything at all for a while. This is especially interesting when it comes to monitoring devices for sensitive use cases, e.g. for device in an alarm system, that send ping data regularly just to indicate that they are still functioning and connected.

According to the present invention, it is thereby, e.g., possible to provide a "heartbeat" or "watchdog" functionality as part of the common services entity or functionality 240 and/or the common services layer 200: In some systems, this functionality might be available but it is then implemented externally; hence, by providing the capability according to the present invention, it is advantageously possible according to the present invention to implement this functionality within or as part of the common services entity or functionality 240 and/or the common services layer 200 which would significantly reduce the complexity of such systems, for example
-- in case where integration with any other oneM2M functionality is required, especially for delayed delivery of notifications, delivery across the whole system, etc., and/or
-- in case where, according to the present invention, a "watchdog" functionality is enabled for devices, and across devices and systems that don't have this functionality built in, and/or
-- in case where a distributed monitoring functionality shall be enabled even on embedded devices with limited connectivity and computing resources, and/or
-- in case that an application is relevant for security purposes, it is advantageously possible according to the present invention that such an application is not obliged to implement such a "heartbeat" or "watchdog" functionality by itself, or externally to the common services layer 200, but within or as part of the common services entity or functionality 240 and/or the common services layer 200; it is thereby advantageously possible that such an application does not need to implement and securitize such a functionality; as oneM2M assures security and authorized access, any changes or modifications of are necessarily based on, or caused by, authorized access.

According to the present invention, it is especially preferred that, in order for the specific subscription resource 280 to be configured accordingly, it is (or needs to be) generated or initialized by means of the subscription entity or functionality 250 receiving, by the at least one specific subscription consumer entity or functionality 221, an initialization message 280' for the specific subscription resource 280, the initialization message 280' being indicative of a request, by the at least one specific subscription consumer entity or functionality 221, for a subscription of the specific subscription resource 280.

Especially according to the present invention, the subscription entity or functionality 250 determines, especially based on the initialization message 280', that the at least one specific subscription consumer entity or functionality 221 has the respective privilege to initialize or to trigger to initialize the specific subscription resource 280.

Another oneM2M resource type is the "<crossResourceSubscription>". Its purpose is to collect one or more notifications from (other) <subscription> resources within a configurable time window. Sometimes, in loT applications, it is enough or desired to know when and if certain events happen together.

For example, in a conventionally known home automation installation, an alarm system is configured that an alarm is only raised when both a door sensor reports an opened door AND a movement sensor reports movement within in a time window of 10 seconds. If only one of the sensors report an event within that 10 seconds, then no alarm is raised. A notification is only sent when the respective notifications and are received within the same time window.

One part of monitoring a (IoT) system and devices is to wait for and react on notifications/events.

According to the present invention, it is proposed that the specific subscription resources are defined such that (while especially referring to other subscriptions (themselves monitoring elements or resources of or within or being parts of the internet-of-things system)) a notification is triggered (to be sent especially to the at least one specific subscription consumer entity or functionality) in case that certain events do not occur or did not occur within a predefined or sliding time interval or time window, i.e. a functionality is added to the common services entity or functionality that multiple resources that are specified must not change within a time window.

## Claims

1. Method for operating a common services entity or functionality (240) for an internet-of-things system (150), the internet-of-things system (150) comprising a plurality of internet-of-things communication devices (20) in a telecommunications network (100), wherein the common services entity or functionality (240) comprises or is assigned to or accesses a subscription entity or functionality (250) as at least one common service function supported by a common services layer (200) for the internet-of-things system (150), wherein the subscription entity or functionality (250) is used or accessed by a plurality of application entities or functionalities (220) or by other common services entities or functionalities, and wherein the subscription entity or functionality (250) is enabled to generate a specific subscription resource (280) related to at least one specific subscription consumer entity or functionality (221), the specific subscription resource (280) furthermore being related to at least one specific internet-of-things communication device (21), the at least one specific internet-of-things communication device (21) being able to be activated or being able to change its state or mode of operation, wherein, in order to operate the common services entity or functionality (240) with the subscription entity or functionality (250) and/or with the specific subscription resource (280) being related to a timer entity or functionality (281) defining a time duration, the method comprises the following steps:
-- in a first step, the timer entity or functionality (281) is started or caused to be started by the subscription entity or functionality (250) and/or by the specific subscription resource (280),
-- in a second step, a notification (282) is transmitted or triggered to be transmitted, by the subscription entity or functionality (250) and/or by the specific subscription resource (280), towards the at least one specific subscription consumer entity or functionality (221) in case that - upon the timer entity or functionality (281) being elapsed - the specific internet-of-things communication device (21) has remained inactivated or has maintained its state or its mode of operation during the time duration of the timer entity or functionality (281).

2. Method according to claim 1, wherein the common services entity or functionality (240) is an instantiation of a set of at least one common service functions, wherein the common services entity or functionality (240) is hosted on a network node, especially an infrastructure node and/or a middle node and/or an application-service node, wherein especially the common services layer (200) supports a set of common service functions, especially service capabilities.

3. Method according to one of the preceding claims, wherein the specific subscription resource (280), related to the at least one specific subscription consumer entity or functionality (221) and to the at least one specific internet-of-things communication device (21), is generated or initialized by means of the subscription entity or functionality (250) receiving, by the at least one specific subscription consumer entity or functionality (221), an initialization message (280') for the specific subscription resource (280),
wherein the initialization message (280') is indicative of a request, by the at least one specific subscription consumer entity or functionality (221), for a subscription of the specific subscription resource (280),
wherein especially the subscription entity or functionality (250) determines, especially based on the initialization message (280'), that the at least one specific subscription consumer entity or functionality (221) has privilege to initialize or to trigger to initialize the specific subscription resource (280),
wherein especially the specific subscription resource (280) is only indirectly related to the at least one specific internet-of-things communication device (21), .

4. Method according to one of the preceding claims, wherein, in the second step, the notification (282) is transmitted or triggered to be transmitted, by the subscription entity or functionality (250) and/or by the specific subscription resource (280), towards the at least one specific subscription consumer entity or functionality (221) in case that the specific internet-of-things communication device (21) has neither been activated nor has changed its state or its mode of operation during the time duration of the timer entity or functionality (281).

5. Method according to one of the preceding claims, wherein the specific subscription consumer entity or functionality (221) corresponds to an application entity or functionality or to another common services entity or functionality.

6. Method according to one of the preceding claims, wherein the telecommunications network (100) provides radio coverage in a predetermined geographical area (120), and - by means of transmission of internet-of-things payload data from the internet-of-things communication devices (20), respectively, to the telecommunications network (100) and/or from the telecommunications network (100) to the internet-of-things communication devices (20), respectively - the internet-of-things system (150) provides an internet-of-things service.

7. Internet-of-things system (150) or telecommunications network (100) for being operated with or comprising a common services entity or functionality (240), the internet-of-things system (150) comprising a plurality of internet-of-things communication devices (20) in the telecommunications network (100), wherein the common services entity or functionality (240) comprises or is assigned to or accesses a subscription entity or functionality (250) as at least one common service function supported by a common services layer (200) for the internet-of-things system (150),
wherein the subscription entity or functionality (250) is used or accessed by a plurality of application entities or functionalities (220) or by other common services entities or functionalities, and wherein the subscription entity or functionality (250) is enabled to generate a specific subscription resource (280) related to at least one specific subscription consumer entity or functionality (221), the specific subscription resource (280) furthermore being related to at least one specific internet-of-things communication device (21),
the at least one specific internet-of-things communication device (21) being able to be activated or being able to change its state or mode of operation,
wherein, in order to operate the common services entity or functionality (240) with the subscription entity or functionality (250) and/or with the specific subscription resource (280) being related to a timer entity or functionality (281) defining a time duration, the internet-of-things system (150) is configured such that:
-- the timer entity or functionality (281) is started or caused to be started by the subscription entity or functionality (250) and/or by the specific subscription resource (280),
-- a notification (282) is transmitted or triggered to be transmitted, by the subscription entity or functionality (250) and/or by the specific subscription resource (280), towards the at least one specific subscription consumer entity or functionality (221) in case that - upon the timer entity or functionality (281) being elapsed - the specific internet-of-things communication device (21) has remained inactivated or has maintained its state or its mode of operation during the time duration of the timer entity or functionality (281).

8. Program comprising a computer readable program code, which, when executed on a computer and/or on a network node of an internet-of-things system (150) and/or on a common services entity or functionality (240) and/or on a subscription entity or functionality (250), or in part on a network node of an internet-of-things system (150) and/or in part on a common services entity or functionality (240) and/or in part on a subscription entity or functionality (250), causes the computer and/or the network node of an internet-of-things system (150) and/or the common services entity or functionality (240) and/or the subscription entity or functionality (250) to perform a method according one of claims 1 to 6.

9. Computer-readable medium comprising instructions which when executed on a computer and/or on a network node of an internet-of-things system (150) and/or on a common services entity or functionality (240) and/or on a subscription entity or functionality (250), or in part on a network node of an internet-of-things system (150) and/or in part on a common services entity or functionality (240) and/or in part on a subscription entity or functionality (250), causes the computer and/or the network node of an internet-of-things system (150) and/or the common services entity or functionality (240) and/or the subscription entity or functionality (250) to perform a method according one of claims 1 to 6.

## Patentansprüche

1. Verfahren zum Betreiben einer gemeinsamen Dienste-Entität oder -Funktionalität (240) für ein Internet-der-Dinge-System (150), wobei das Internet-der-Dinge-System (150) eine Mehrzahl von Internet-der-Dinge-Kommunikationsgeräten (20) in einem Telekommunikationsnetz (100) umfasst, wobei die gemeinsame Dienste-Entität oder -Funktionalität (240) eine Subskriptions-Entität oder -Funktionalität (250) als wenigstens eine von einer gemeinsamen Diensteschicht (200) für das Internet-der-Dinge-System (150) unterstützte gemeinsame Dienstfunktion umfasst oder ihr zugeordnet ist oder auf sie zugreift,
wobei die Subskriptions-Entität oder -Funktionalität (250) von einer Mehrzahl von Anwendungs-Entitäten oder -Funktionalitäten (220) oder von anderen gemeinsamen Dienste-Entitäten oder - Funktionalitäten verwendet oder auf sie zugegriffen wird, und wobei die Subskriptions-Entität oder -Funktionalität (250) dazu befähigt ist, eine spezifische Subskriptionsressource (280) zu erzeugen, die sich auf wenigstens eine spezifische Subskriptionskonsument-Entität oder - Funktionalität (221) bezieht, wobei die spezifische Subskriptionsressource (280) ferner auf wenigstens ein spezifisches Internet-der-Dinge-Kommunikationsgerät (21) bezogen ist, wobei das wenigstens eine spezifische Internet-der-Dinge-Kommunikationsgerät (21) aktivierbar ist oder seinen Zustand oder seine Betriebsart ändern kann,
wobei, um die gemeinsame Dienste-Entität oder -Funktionalität (240) mit der Subskriptions-Entität oder -Funktionalität (250) und/oder mit der spezifischen Subskriptionsressource (280) zu betreiben, wobei die spezifische Subskriptionsressource (280) mit einer eine Zeitdauer definierenden Timer-Entität oder -Funktionalität (281) in Beziehung steht, das Verfahren die folgenden Schritte umfasst:
- in einem ersten Schritt wird die Timer-Entität oder -Funktionalität (281) durch die Subskriptions-Entität oder -Funktionalität (250) und/oder durch die spezifische Subskriptionsressource (280) gestartet oder veranlasst zu starten,
- in einem zweiten Schritt wird eine Benachrichtigung (282) durch die Subskriptions-Entität oder -Funktionalität (250) und/oder durch die spezifische Subskriptionsressource (280) an die wenigstens eine spezifische Subskriptionskonsument-Entität oder - Funktionalität (221) übermittelt oder veranlasst zu übermitteln, für den Fall, dass - nach Ablauf der Timer-Entität oder -Funktionalität (281) - das spezifische Internet-der-Dinge-Kommunikationsgerät (21) während der Zeitdauer der Timer-Entität oder -Funktionalität (281) inaktiviert geblieben ist oder seinen Zustand oder seine Betriebsart beibehalten hat.

2. Verfahren nach Anspruch 1, wobei die gemeinsame Dienste-Entität oder -Funktionalität (240) eine Instanziierung einer Menge von wenigstens einer gemeinsamen Dienstfunktion ist, wobei die gemeinsame Dienste-Entität oder -Funktionalität (240) auf einem Netzwerkknoten gehostet ist, insbesondere einem Infrastrukturknoten und/oder einem Zwischenknoten und/oder einem Anwendungsdienstknoten, wobei insbesondere die gemeinsame Diensteschicht (200) eine Menge von gemeinsamen Dienstfunktionen unterstützt, insbesondere Dienstfähigkeiten.

3. Verfahren nach einem der vorhergehenden Ansprüche, wobei die spezifische Subskriptionsressource (280), die sich auf die wenigstens eine spezifische Subskriptionskonsument-Entität oder -Funktionalität (221) und auf das wenigstens eine spezifische Internet-der-Dinge-Kommunikationsgerät (21) bezieht, durch die Subskriptions-Entität oder -Funktionalität (250) erzeugt oder initialisiert wird, indem die Subskriptions-Entität oder -Funktionalität (250) von der wenigstens einen spezifischen Subskriptionskonsument-Entität oder -Funktionalität (221) eine Initialisierungsnachricht (280') für die spezifische Subskriptionsressource (280) empfängt,
wobei die Initialisierungsnachricht (280') eine Anforderung der wenigstens einen spezifischen Subskriptionskonsument-Entität oder -Funktionalität (221) auf eine Subskription der spezifischen Subskriptionsressource (280) anzeigt,
wobei insbesondere die Subskriptions-Entität oder -Funktionalität (250), insbesondere auf der Grundlage der Initialisierungsnachricht (280'), feststellt, dass die wenigstens eine spezifische Subskriptionskonsument-Entität oder -Funktionalität (221) berechtigt ist, die spezifische Subskriptionsressource (280) zu initialisieren oder deren Initialisierung zu veranlassen,
wobei insbesondere die spezifische Subskriptionsressource (280) nur mittelbar auf das wenigstens eine spezifische Internet-der-Dinge-Kommunikationsgerät (21) bezogen ist.

4. Verfahren nach einem der vorhergehenden Ansprüche, wobei im zweiten Schritt die Benachrichtigung (282) durch die Subskriptions-Entität oder -Funktionalität (250) und/oder durch die spezifische Subskriptionsressource (280) an die wenigstens eine spezifische Subskriptionskonsument-Entität oder -Funktionalität (221) übermittelt oder veranlasst zu übermitteln ist, für den Fall, dass das spezifische Internet-der-Dinge-Kommunikationsgerät (21) während der Zeitdauer der Timer-Entität oder -Funktionalität (281) weder aktiviert wurde noch seinen Zustand oder seine Betriebsart geändert hat.

5. Verfahren nach einem der vorhergehenden Ansprüche, wobei die spezifische Subskriptionskonsument-Entität oder -Funktionalität (221) einer Anwendungs-Entität oder - Funktionalität oder einer anderen gemeinsamen Dienste-Entität oder -Funktionalität entspricht.

6. Verfahren nach einem der vorhergehenden Ansprüche, wobei das Telekommunikationsnetz (100) Funkabdeckung in einem vorbestimmten geografischen Gebiet (120) bereitstellt und - mittels Übertragung von Internet-der-Dinge-Nutzdaten von den Internet-der-Dinge-Kommunikationsgeräten (20) jeweils an das Telekommunikationsnetz (100) und/oder vom Telekommunikationsnetz (100) an die Internet-der-Dinge-Kommunikationsgeräte (20) - das Internet-der-Dinge-System (150) einen Internet-der-Dinge-Dienst bereitstellt.

7. Internet-der-Dinge-System (150) oder Telekommunikationsnetz (100) zum Betrieb mit oder umfassend eine gemeinsame Dienste-Entität oder -Funktionalität (240), wobei das Internet-der-Dinge-System (150) eine Mehrzahl von Internet-der-Dinge-Kommunikationsgeräten (20) im Telekommunikationsnetz (100) umfasst, wobei die gemeinsame Dienste-Entität oder - Funktionalität (240) eine Subskriptions-Entität oder -Funktionalität (250) als wenigstens eine von einer gemeinsamen Diensteschicht (200) für das Internet-der-Dinge-System (150) unterstützte gemeinsame Dienstfunktion umfasst oder ihr zugeordnet ist oder auf sie zugreift,
wobei die Subskriptions-Entität oder -Funktionalität (250) von einer Mehrzahl von Anwendungs-Entitäten oder -Funktionalitäten (220) oder von anderen gemeinsamen Dienste-Entitäten oder - Funktionalitäten verwendet oder auf sie zugegriffen wird, und wobei die Subskriptions-Entität oder -Funktionalität (250) dazu befähigt ist, eine spezifische Subskriptionsressource (280) zu erzeugen, die sich auf wenigstens eine spezifische Subskriptionskonsument-Entität oder - Funktionalität (221) bezieht, wobei die spezifische Subskriptionsressource (280) ferner auf wenigstens ein spezifisches Internet-der-Dinge-Kommunikationsgerät (21) bezogen ist, wobei das wenigstens eine spezifische Internet-der-Dinge-Kommunikationsgerät (21) aktivierbar ist oder seinen Zustand oder seine Betriebsart ändern kann,
wobei, um die gemeinsame Dienste-Entität oder -Funktionalität (240) mit der Subskriptions-Entität oder -Funktionalität (250) und/oder mit der spezifischen Subskriptionsressource (280) zu betreiben, wobei die spezifische Subskriptionsressource (280) mit einer eine Zeitdauer definierenden Timer-Entität oder -Funktionalität (281) in Beziehung steht, das Internet-der-Dinge-System (150) derart konfiguriert ist, dass:
- die Timer-Entität oder -Funktionalität (281) durch die Subskriptions-Entität oder - Funktionalität (250) und/oder durch die spezifische Subskriptionsressource (280) gestartet oder veranlasst zu starten wird,
- eine Benachrichtigung (282) durch die Subskriptions-Entität oder -Funktionalität (250) und/oder durch die spezifische Subskriptionsressource (280) an die wenigstens eine spezifische Subskriptionskonsument-Entität oder -Funktionalität (221) übermittelt oder veranlasst zu übermitteln wird, für den Fall, dass - nach Ablauf der Timer-Entität oder - Funktionalität (281) - das spezifische Internet-der-Dinge-Kommunikationsgerät (21) während der Zeitdauer der Timer-Entität oder -Funktionalität (281) inaktiviert geblieben ist oder seinen Zustand oder seine Betriebsart beibehalten hat.

8. Programm, umfassend einen computerlesbaren Programmcode, der, wenn er auf einem Computer und/oder auf einem Netzwerkknoten eines Internet-der-Dinge-Systems (150) und/oder auf einer gemeinsamen Dienste-Entität oder -Funktionalität (240) und/oder auf einer Subskriptions-Entität oder -Funktionalität (250) ausgeführt wird, oder teilweise auf einem Netzwerkknoten eines Internet-der-Dinge-Systems (150) und/oder teilweise auf einer gemeinsamen Dienste-Entität oder -Funktionalität (240) und/oder teilweise auf einer Subskriptions-Entität oder -Funktionalität (250) ausgeführt wird, den Computer und/oder den Netzwerkknoten des Internet-der-Dinge-Systems (150) und/oder die gemeinsame Dienste-Entität oder -Funktionalität (240) und/oder die Subskriptions-Entität oder -Funktionalität (250) veranlasst, ein Verfahren nach einem der Ansprüche 1 bis 6 durchzuführen.

9. Computerlesbares Medium, umfassend Anweisungen, die, wenn sie auf einem Computer und/oder auf einem Netzwerkknoten eines Internet-der-Dinge-Systems (150) und/oder auf einer gemeinsamen Dienste-Entität oder -Funktionalität (240) und/oder auf einer Subskriptions-Entität oder -Funktionalität (250) ausgeführt werden, oder teilweise auf einem Netzwerkknoten eines Internet-der-Dinge-Systems (150) und/oder teilweise auf einer gemeinsamen Dienste-Entität oder -Funktionalität (240) und/oder teilweise auf einer Subskriptions-Entität oder -Funktionalität (250) ausgeführt werden, den Computer und/oder den Netzwerkknoten des Internet-der-Dinge-Systems (150) und/oder die gemeinsame Dienste-Entität oder -Funktionalität (240) und/oder die Subskriptions-Entität oder -Funktionalität (250) veranlassen, ein Verfahren nach einem der Ansprüche 1 bis 6 durchzuführen.

## Revendications

1. Procédé permettant de faire fonctionner une entité ou fonctionnalité de services communs (240) pour un système internet des objets (150), le système internet des objets (150) comprenant une pluralité de dispositifs de communication internet des objets (20) dans un réseau de télécommunications (100), dans lequel l'entité ou fonctionnalité de services communs (240) comprend ou est associée à ou accède à une entité ou fonctionnalité de souscription (250) en tant qu'au moins une fonction de service commun prise en charge par une couche de services communs (200) pour le système internet des objets (150),
dans lequel l'entité ou fonctionnalité de souscription (250) est utilisée ou sollicitée par une pluralité d'entités ou fonctionnalités d'application (220) ou par d'autres entités ou fonctionnalités de services communs, et dans lequel l'entité ou fonctionnalité de souscription (250) est habilitée à générer une ressource de souscription spécifique (280) relative à au moins une entité ou fonctionnalité de consommateur de souscription spécifique (221), la ressource de souscription spécifique (280) étant en outre relative à au moins un dispositif de communication internet des objets spécifique (21), ledit au moins un dispositif de communication internet des objets spécifique (21) étant susceptible d'être activé ou susceptible de modifier son état ou son mode de fonctionnement,
dans lequel, afin de faire fonctionner l'entité ou fonctionnalité de services communs (240) avec l'entité ou fonctionnalité de souscription (250) et/ou avec la ressource de souscription spécifique (280) étant associée à une entité ou fonctionnalité de minuterie (281) définissant une durée, le procédé comprend les étapes suivantes :
- dans une première étape, l'entité ou fonctionnalité de minuterie (281) est démarrée ou amenée à être démarrée par l'entité ou fonctionnalité de souscription (250) et/ou par la ressource de souscription spécifique (280),
- dans une deuxième étape, une notification (282) est transmise ou déclenchée pour être transmise, par l'entité ou fonctionnalité de souscription (250) et/ou par la ressource de souscription spécifique (280), à destination de l'au moins une entité ou fonctionnalité de consommateur de souscription spécifique (221), dans le cas où - à l'expiration de l'entité ou fonctionnalité de minuterie (281) - le dispositif de communication internet des objets spécifique (21) est resté inactivé ou a maintenu son état ou son mode de fonctionnement pendant la durée de l'entité ou fonctionnalité de minuterie (281).

2. Procédé selon la revendication 1, dans lequel l'entité ou fonctionnalité de services communs (240) est une instanciation d'un ensemble d'au moins une fonction de service commun, dans lequel l'entité ou fonctionnalité de services communs (240) est hébergée sur un nœud de réseau, en particulier un nœud d'infrastructure et/ou un nœud intermédiaire et/ou un nœud de service d'application, dans lequel notamment la couche de services communs (200) prend en charge un ensemble de fonctions de service commun, en particulier des capacités de service.

3. Procédé selon l'une des revendications précédentes, dans lequel la ressource de souscription spécifique (280), relative à l'au moins une entité ou fonctionnalité de consommateur de souscription spécifique (221) et à l'au moins un dispositif de communication internet des objets spécifique (21), est générée ou initialisée au moyen de l'entité ou fonctionnalité de souscription (250) recevant, de la part de l'au moins une entité ou fonctionnalité de consommateur de souscription spécifique (221), un message d'initialisation (280') pour la ressource de souscription spécifique (280),
dans lequel le message d'initialisation (280') indique une demande, par l'au moins une entité ou fonctionnalité de consommateur de souscription spécifique (221), de souscription à la ressource de souscription spécifique (280),
dans lequel notamment l'entité ou fonctionnalité de souscription (250) détermine, notamment sur la base du message d'initialisation (280'), que l'au moins une entité ou fonctionnalité de consommateur de souscription spécifique (221) dispose du privilège d'initialiser ou de déclencher l'initialisation de la ressource de souscription spécifique (280),
dans lequel notamment la ressource de souscription spécifique (280) n'est liée qu'indirectement à l'au moins un dispositif de communication internet des objets spécifique (21).

4. Procédé selon l'une des revendications précédentes, dans lequel, dans la deuxième étape, la notification (282) est transmise ou déclenchée pour être transmise, par l'entité ou fonctionnalité de souscription (250) et/ou par la ressource de souscription spécifique (280), à destination de l'au moins une entité ou fonctionnalité de consommateur de souscription spécifique (221), dans le cas où le dispositif de communication internet des objets spécifique (21) n'a été ni activé ni a modifié son état ou son mode de fonctionnement pendant la durée de l'entité ou fonctionnalité de minuterie (281).

5. Procédé selon l'une des revendications précédentes, dans lequel l'entité ou fonctionnalité de consommateur de souscription spécifique (221) correspond à une entité ou fonctionnalité d'application ou à une autre entité ou fonctionnalité de services communs.

6. Procédé selon l'une des revendications précédentes, dans lequel le réseau de télécommunications (100) fournit une couverture radio dans une zone géographique prédéterminée (120), et - au moyen de la transmission de données utiles internet des objets depuis les dispositifs de communication internet des objets (20), respectivement, vers le réseau de télécommunications (100) et/ou depuis le réseau de télécommunications (100) vers les dispositifs de communication internet des objets (20), respectivement - le système internet des objets (150) fournit un service internet des objets.

7. Système internet des objets (150) ou réseau de télécommunications (100) destiné à être exploité avec ou comprenant une entité ou fonctionnalité de services communs (240), le système internet des objets (150) comprenant une pluralité de dispositifs de communication internet des objets (20) dans le réseau de télécommunications (100), dans lequel l'entité ou fonctionnalité de services communs (240) comprend ou est associée à ou accède à une entité ou fonctionnalité de souscription (250) en tant qu'au moins une fonction de service commun prise en charge par une couche de services communs (200) pour le système internet des objets (150),
dans lequel l'entité ou fonctionnalité de souscription (250) est utilisée ou sollicitée par une pluralité d'entités ou fonctionnalités d'application (220) ou par d'autres entités ou fonctionnalités de services communs, et dans lequel l'entité ou fonctionnalité de souscription (250) est habilitée à générer une ressource de souscription spécifique (280) relative à au moins une entité ou fonctionnalité de consommateur de souscription spécifique (221), la ressource de souscription spécifique (280) étant en outre relative à au moins un dispositif de communication internet des objets spécifique (21), ledit au moins un dispositif de communication internet des objets spécifique (21) étant susceptible d'être activé ou susceptible de modifier son état ou son mode de fonctionnement,
dans lequel, afin de faire fonctionner l'entité ou fonctionnalité de services communs (240) avec l'entité ou fonctionnalité de souscription (250) et/ou avec la ressource de souscription spécifique (280) étant associée à une entité ou fonctionnalité de minuterie (281) définissant une durée, le système internet des objets (150) est configuré de telle sorte que :
- l'entité ou fonctionnalité de minuterie (281) est démarrée ou amenée à être démarrée par l'entité ou fonctionnalité de souscription (250) et/ou par la ressource de souscription spécifique (280),
- une notification (282) est transmise ou déclenchée pour être transmise, par l'entité ou fonctionnalité de souscription (250) et/ou par la ressource de souscription spécifique (280), à destination de l'au moins une entité ou fonctionnalité de consommateur de souscription spécifique (221), dans le cas où - à l'expiration de l'entité ou fonctionnalité de minuterie (281) - le dispositif de communication internet des objets spécifique (21) est resté inactivé ou a maintenu son état ou son mode de fonctionnement pendant la durée de l'entité ou fonctionnalité de minuterie (281).

8. Programme comprenant un code de programme lisible par ordinateur qui, lorsqu'il est exécuté sur un ordinateur et/ou sur un nœud de réseau d'un système internet des objets (150) et/ou sur une entité ou fonctionnalité de services communs (240) et/ou sur une entité ou fonctionnalité de souscription (250), ou en partie sur un nœud de réseau d'un système internet des objets (150) et/ou en partie sur une entité ou fonctionnalité de services communs (240) et/ou en partie sur une entité ou fonctionnalité de souscription (250), amène l'ordinateur et/ou le nœud de réseau du système internet des objets (150) et/ou l'entité ou fonctionnalité de services communs (240) et/ou l'entité ou fonctionnalité de souscription (250) à exécuter un procédé selon l'une des revendications 1 à 6.

9. Support lisible par ordinateur comprenant des instructions qui, lorsqu'elles sont exécutées sur un ordinateur et/ou sur un nœud de réseau d'un système internet des objets (150) et/ou sur une entité ou fonctionnalité de services communs (240) et/ou sur une entité ou fonctionnalité de souscription (250), ou en partie sur un nœud de réseau d'un système internet des objets (150) et/ou en partie sur une entité ou fonctionnalité de services communs (240) et/ou en partie sur une entité ou fonctionnalité de souscription (250), amènent l'ordinateur et/ou le nœud de réseau du système internet des objets (150) et/ou l'entité ou fonctionnalité de services communs (240) et/ou l'entité ou fonctionnalité de souscription (250) à exécuter un procédé selon l'une des revendications 1 à 6.
